# EUROPEAN PATENT APPLICATION

(11) **EP 4 491 491 A1**
(43) Date of publication of application: **15.01.2025**
(21) Application number: 22930162.7
(22) Date of filing: 11.03.2022
(51) Int. Cl.: B62D 5/04

(54) **STEERING DEVICE**

(71) Applicant: JTEKT CORPORATION, Kariya-shi, Aichi-ken, 448-8652 (JP)
(72) Inventor: MYOHOJI Yu, Kariya-shi, Aichi 448-8652 (JP); KAWAMURA Naofumi, Kariya-shi, Aichi 448-8652 (JP); TANIOKA Yasuhiro, Kariya-shi, Aichi 448-8652 (JP); KUWAHARA Yuya, Kariya-shi, Aichi 448-8652 (JP); TOYAMA Yuichi, Kariya-shi, Aichi 448-8652 (JP); NAKAAKI Takao, Kosai-shi, Shizuoka 431-0431 (JP)
(74) Representative: Winter, Brandl - Partnerschaft mbB
(86) International application number: PCT/JP2022/011022
(87) International publication number: WO 2023/170957

(57) **Abstract**

A steering system has a support tube (17) that supports a steering shaft (2), and a housing (18) that has a cylindrical portion (41) housing a speed reducer (20). A bearing support member (50) is fitted to an inner circumferential face of the cylindrical portion (41). A bearing (71) is disposed between an outer circumferential face of the steering shaft (2) and an inner circumferential face of the bearing support member (50). The bearing support member (50) has an inner circumferential wall (51) that fits to an outer circumferential face of the bearing (71), an outer circumferential wall (52) that fits to the inner circumferential face of the cylindrical portion (41), and a coupling wall (53) that couples the inner circumferential wall (51) and the outer circumferential wall (52) in a radial direction. The inner circumferential wall (51) extends from the coupling wall (53) in a same direction as a mounting direction (DW), and the outer circumferential wall (52) extends in an opposite direction from the mounting direction (DW).

## Description

### TECHNICAL FIELD

The present disclosure relates to a steering system.

### BACKGROUND ART

There conventionally is an electric power steering system that uses a motor to assist steering. For example, a steering system disclosed in Patent Document 1 has a motor and a bearing unit. A steering shaft passes through the bearing unit in an axial direction. The bearing unit has a housing. The housing has a casing and a casing cover. The casing has an opening that opens in the axial direction. The casing cover is attached to the casing so as to close the opening of the casing.

The housing houses a helical gear and a damper disk. The helical gear is coupled to the steering shaft so as to be integrally rotatable therewith. The helical gear is driven by the motor. The helical gear is supported in the axial direction by both a first bearing and a second bearing. The first bearing is provided on the damper disk. The second bearing is provided on an end wall of the casing. The end wall is a wall on an opposite side from the opening. The steering shaft is rotatably supported with respect to the casing by the first bearing and the second bearing.

The damper disk is situated between the helical gear and the casing cover in the axial direction. The damper disk is attached to an outer circumferential face of the steering shaft via the first bearing. An outer circumferential face of the damper disk is in contact with an inner circumferential face of the casing. A portion of the casing cover is supported on a side face of the damper disk via a spring member. The spring member applies an elastic force to the damper disk in the axial direction toward the helical gear. The elastic force of the spring member suppresses the damper disk from moving in a direction away from the helical gear.

The damper disk has a function of absorbing shock acting in a radial direction and the axial direction of the steering shaft.

### Related Art Documents

### Patent Documents

Patent Document 1: Japanese Unexamined Patent Application Publication (Translation of PCT Application ) No. 2018-520926 (JP 2018-520926 A)

### SUMMARY OF THE INVENTION

### Problem to be Solved by the Invention

In recent years, customer demands for steering systems have become increasingly diverse based on vehicle specifications and so forth. In order to meet these demands, a wide range of research and development has been conducted with regard to configurations of steering systems. There is demand for a steering system having a new configuration.

### Means for Solving the Problem

A steering system according to an aspect of the present disclosure includes a support tube that is cylindrical in shape, has a flange, and rotatably supports a steering shaft, a speed reducer that is configured to apply torque to the steering shaft, a housing that has a cylindrical portion housing the speed reducer, the cylindrical portion being coaxially coupled to the flange, a bearing support member through which the steering shaft passes, and that is fitted to an inner circumferential face of the cylindrical portion from a mounting direction that is a direction along an axial direction, and a bearing interposed between an outer circumferential face of the steering shaft and an inner circumferential face of the bearing support member. The bearing support member has an inner circumferential wall that fits to an outer circumferential face of the bearing, an outer circumferential wall that fits to an inner circumferential face of the cylindrical portion, and a coupling wall that couples the inner circumferential wall and the outer circumferential wall in a radial direction. The inner circumferential wall has a basal end portion coupled to the coupling wall, and also extends from the coupling wall in the same direction as the mounting direction. The outer circumferential wall has a basal end portion coupled to the coupling wall, and also extends from the coupling wall in an opposite direction from the mounting direction.

### BRIEF DESCRIPTION OF THE DRAWINGS

[FIG. 1] FIG. 1 is a schematic diagram illustrating a configuration of a steering system according to a first embodiment.
[FIG. 2] FIG. 2 is a perspective view of a steering column in FIG. 1.
[FIG. 3] FIG. 3 is a sectional view of a coupling portion between a housing and a lower tube in FIG. 2.
[FIG. 4] FIG. 4 is a perspective view of a bearing support member in FIG. 3 as viewed diagonally from above.
[FIG. 5] FIG. 5 is a perspective view of the bearing support member in FIG. 3 as viewed diagonally from below.
[FIG. 6] FIG. 6 is a half sectional view of the bearing support member in FIG. 3.
[FIG. 7] FIG. 7 is a half sectional view of the bearing support member in FIG. 3.
[FIG. 8] FIG. 8 is a sectional view of a housing according to a second embodiment.

### MODES FOR CARRYING OUT THE INVENTION

### <First Embodiment>

A first embodiment of a steering system will be described.

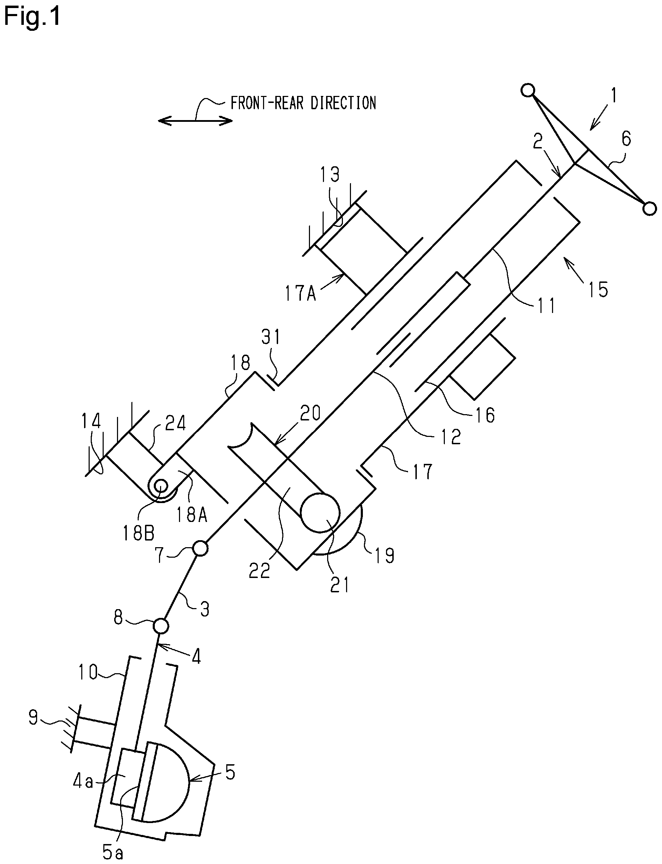

As illustrated in FIG. 1, a steering system 1 has a steering shaft 2, an intermediate shaft 3, a pinion shaft 4, and a rack shaft 5. A steering wheel 6 is coupled to a first end portion of the steering shaft 2. A first end portion of the intermediate shaft 3 is coupled to a second end portion of the steering shaft 2 via a universal joint 7. A first end portion of the pinion shaft 4 is coupled to a second end portion of the intermediate shaft 3 via a universal joint 8. A pinion 4a is provided at a second end portion of the pinion shaft 4. The pinion 4a meshes with a rack 5a provided on the rack shaft 5. The rack shaft 5 is supported inside a housing 10 fixed to a frame 9 of a vehicle body. The rack shaft 5 is movable in a right direction or a left direction with respect to a direction of travel of a vehicle. Both end portions of the rack shaft 5 are coupled to right and left steered wheels (omitted from illustration) via tie rods (omitted from illustration).

The steering shaft 2 has an outer shaft 11 and an inner shaft 12. The outer shaft 11 and the inner shaft 12 are coupled to each other by, for example, spline joining. The outer shaft 11 and the inner shaft 12 are integrally rotatable and also can move relatively in their axial direction. The steering shaft 2 is provided so as to be inclined with respect to a front-rear direction of the vehicle, with the steering wheel 6 facing upward.

The steering system 1 has a steering column 15. The steering shaft 2 is inserted through the steering column 15. The steering shaft 2 is supported via a bearing (omitted from illustration) so as to be rotatable with respect to the steering column 15. The steering column 15 is attached to two frames 13 and 14 provided on the vehicle body. One frame 13 is situated behind the other frame 14 in the front-rear direction of the vehicle.

The steering column 15 has an upper tube 16, a lower tube 17, and a housing 18. The upper tube 16 has a cylindrical shape. The lower tube 17 has a cylindrical shape and has a flange 31. The upper tube 16 and the lower tube 17 are fitted together. As an example, the upper tube 16 is inserted into a first end portion of the lower tube 17. The first end portion is an end portion on an opposite side from a second end portion provided with the flange 31. The upper tube 16 and the lower tube 17 can move relative to each other in the axial direction of the steering shaft 2. The lower tube 17 has a column bracket 17A. The lower tube 17 is attached to the frame 13 of the vehicle body via the column bracket 17A.

The upper tube 16 and the lower tube 17 are made of, for example, a magnetic material. The magnetic material includes a magnetic metal such as iron or the like. The upper tube 16 and the lower tube 17 make up a support tube that rotatably supports the steering shaft 2.

The housing 18 is coupled to the second end portion of the lower tube 17. The housing 18 has two support portions 18A (only one is illustrated in FIG. 1) and a support shaft 18B. The two support portions 18A are provided on a side face of the housing 18 on the opposite side from the lower tube 17. The two support portions 18A face each other in a width direction of the vehicle body. The support shaft 18B extends between the two support portions 18A. The support shaft 18B is rotatably coupled to a bracket 24 that is fixed to the frame 14 of the vehicle body.

A motor 19 for assisting in steering is provided outside of the housing 18. A speed reducer 20 is housed inside the housing 18. The speed reducer 20 reduces the speed of rotation of the motor 19, and transmits the speed-reduced rotation to the inner shaft 12. The speed reducer 20 is a worm speed reducer that has a worm 21 and a worm wheel 22. The worm 21 is coupled to an output shaft (omitted from illustration) of the motor 19 so as to be integrally rotatable therewith. The axial line of the worm 21 and the axial line of the output shaft of the motor 19 are situated on the same line. The worm wheel 22 meshes with the worm 21. The worm wheel 22 is provided so as to be integrally rotatable with the inner shaft 12. The axial line of the worm wheel 22 and the axial line of the inner shaft 12 are situated on the same line.

The steering system 1 has a lock mechanism (omitted from illustration). The lock mechanism selectively locks and unlocks swinging of the steering column 15 about the support shaft 18B and telescopic motion of the steering column 15 through an operation performed on a lever (omitted from illustration). An unlocking operation of the lever allows the steering column 15 to swing with respect to the column bracket 17A about the support shaft 18B. An up-down position of the steering wheel 6 can be adjusted by performing the unlocking operation of the lever and thereafter moving the steering wheel 6 up or down. The unlocking operation of the lever also allows the upper tube 16 to move in the axial direction of the steering shaft 2 with respect to the lower tube 17. The position of the steering wheel 6 in the axial direction can be adjusted by performing the unlocking operation of the lever and thereafter moving the steering wheel 6 in the axial direction of the steering shaft 2.

### Next, a configuration of the lower tube 17 will be described in detail.

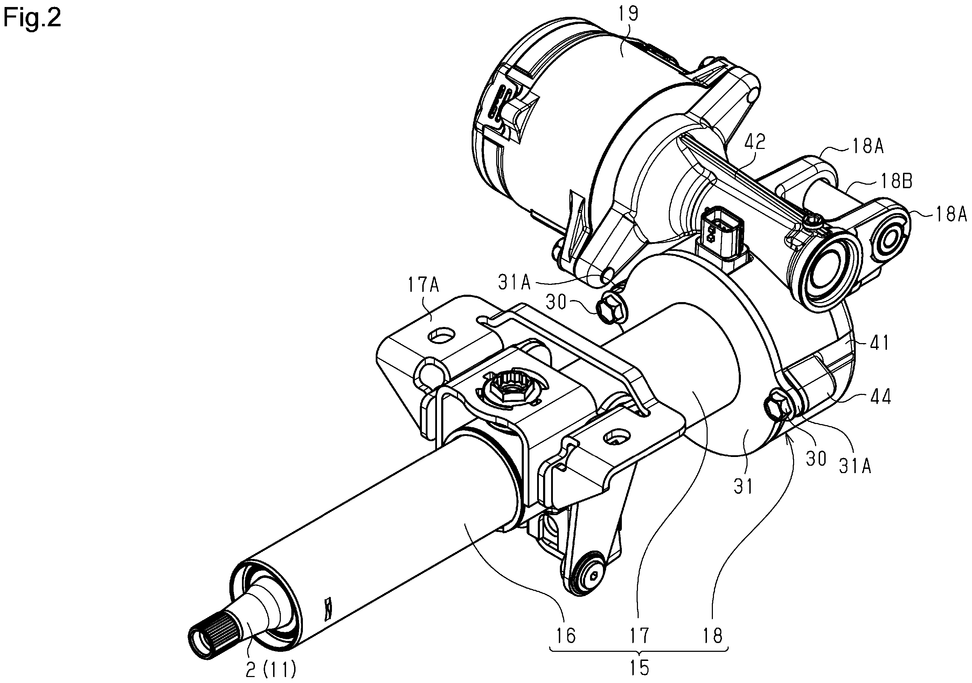

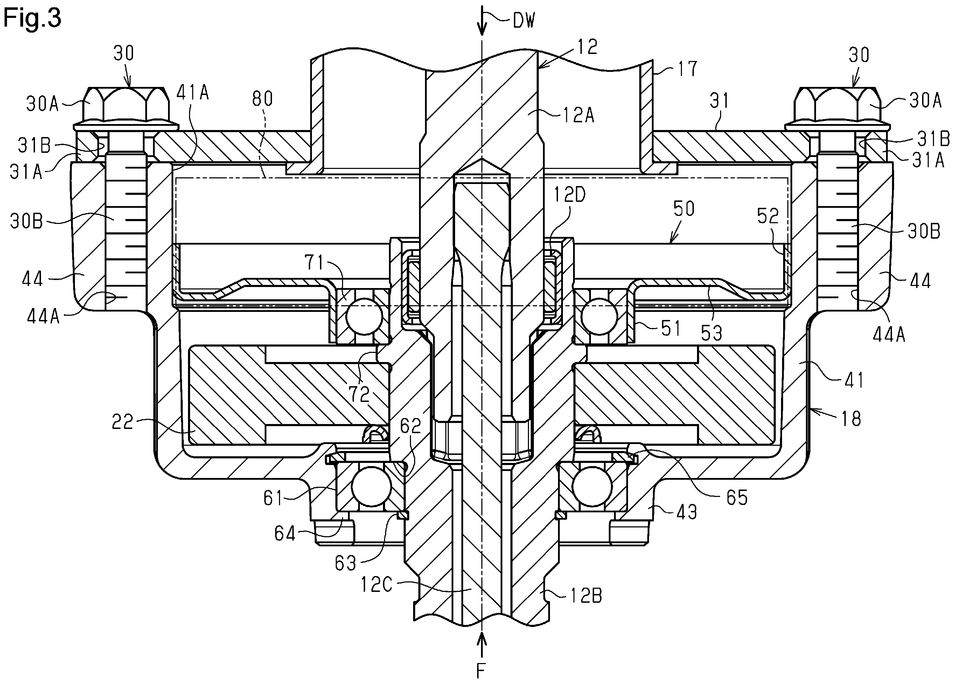

As illustrated in FIG. 2, the lower tube 17 has the flange 31. The flange 31 is provided at the second end portion of the lower tube 17. The second end portion of the lower tube 17 is an end portion on the opposite side from the first end portion into which the upper tube 16 is inserted. The flange 31 is a flat plate in an annular shape. The flange 31 has two attachment portions 31A. The two attachment portions 31A are provided on an outer circumferential face of the flange 31. The two attachment portions 31A protrude outward in a radial direction from the outer circumferential face of the flange 31. The two attachment portions 31A are situated on opposite sides to each other in the radial direction of the flange 31. As illustrated in FIG. 3, the two attachment portions 31A each have an insertion hole 31B. Bolts 30 are inserted through the insertion holes 31B. The flange 31 is fixed to the housing 18 by tightening the bolts 30 to the housing 18. The bolts 30 each has a head portion 30A and a shaft portion 30B.

### Next, a configuration of the housing 18 will be described in detail.

As illustrated in FIG. 2, the housing 18 has a worm wheel housing member 41 and a worm housing member 42. Each of the worm wheel housing member 41 and the worm housing member 42 has a cylindrical shape. The worm housing member 42 is coupled to an outer circumferential face of the worm wheel housing member 41. The worm housing member 42 extends in a direction that is orthogonal to the axial line of the worm wheel housing member 41. Inside of the worm wheel housing member 41 and inside of the worm housing member 42 communicate with each other via a communication hole (omitted from illustration). The worm wheel housing member 41 makes up a cylindrical portion of the housing 18. The housing 18 is made of, for example, a non-magnetic material. The non-magnetic material includes a non-magnetic metal such as aluminum or the like.

The worm wheel 22 is rotatably housed inside the worm wheel housing member 41. The worm 21 is rotatably supported inside the worm housing member 42 via a bearing (omitted from illustration). The worm wheel 22 and the worm 21 mesh with each other via the communication hole provided inside the housing 18. The worm wheel 22 and the worm 21 are made of, for example, a magnetic material. The magnetic material includes a magnetic metal such as iron or the like.

As illustrated in FIG. 3, the worm wheel housing member 41 has an opening 41A at a first end portion thereof in the axial direction, and has an end wall at a second end portion thereof on a side opposite to the first end portion. The opening 41A opens to the lower tube 17 along the axial line of the worm wheel housing member 41. An outside diameter of the worm wheel housing member 41 is substantially the same as an outside diameter of the flange 31.

The worm wheel housing member 41 has a bearing support portion 43 that has a cylindrical shape. The bearing support portion 43 is provided on the end wall of the worm wheel housing member 41. The opening 41A and the bearing support portion 43 are disposed coaxially. Inside of the worm wheel housing member 41 and outside of the worm wheel housing member 41 communicate with each other via the bearing support portion 43.

The worm wheel housing member 41 has two tightening portions 44. The tightening portions 44 are portions to which the bolts 30 are tightened when fixing the flange 31 to the housing 18. The tightening portions 44 protrude outward in the radial direction from the outer circumferential face of the worm wheel housing member 41. The two tightening portions 44 are situated on opposite sides from each other in the radial direction of the worm wheel housing member 41. The tightening portions 44 each have a screw hole 44A. End faces of the tightening portions 44 in which the screw holes 44A open are flush with an end face of the worm wheel housing member 41 in which the opening 41A opens.

A peripheral edge of the flange 31 abuts against the end face of the worm wheel housing member 41 in which the opening 41A opens. The insertion hole 31B of the flange 31 and the screw hole 44A of the housing 18 are aligned with each other. The bolt 30 is inserted through the insertion hole 31B of the flange 31 from the side opposite from the housing 18. This bolt 30 is tightened as to the tightening portion 44 of the housing 18. Thus, the flange 31 is fixed to the housing 18. That is to say, the lower tube 17 is coupled to the housing 18 via the flange 31. Also, the opening 41A of the housing 18 is closed by the flange 31. The flange 31 serves also as a cover that closes the opening 41A of the housing 18.

The worm wheel housing member 41 rotatably supports the inner shaft 12. The inner shaft 12 passes through the worm wheel housing member 41. The axial line of the inner shaft 12 and the axial line of the worm wheel housing member 41 are situated on the same line. The inner shaft 12 has an input shaft 12A, an output shaft 12B, and a torsion bar 12C. The input shaft 12A and the output shaft 12B are coupled to each other via the torsion bar 12C. The output shaft 12B is a hollow cylinder.

A first end portion of the input shaft 12Ais coupled to the outer shaft 11. A second end portion of the input shaft 12A is inserted into a first end portion of the output shaft 12B. A clearance is present between an outer circumferential face of the input shaft 12A and an inner circumferential face of the output shaft 12B. A plain bearing 12D is interposed between the outer circumferential face of the input shaft 12A and the inner circumferential face of the output shaft 12B. The input shaft 12A and the output shaft 12B can rotate relative to each other via the plain bearing 12D.

A first end portion of the torsion bar 12C is inserted into the second end portion of the input shaft 12A, and is fixed thereto in this state. A second end portion of the torsion bar 12C is inserted through inside of the output shaft 12B. A clearance is present between the outer circumferential face of the torsion bar 12C and the inner circumferential face of the output shaft 12B. The second end portion of the torsion bar 12C is fixed to a second end portion of the output shaft 12B. Steering torque applied to the steering wheel 6 is transmitted to the output shaft 12B via the input shaft 12A and the torsion bar 12C. The torsion bar 12C twists in accordance with the steering torque.

The worm wheel 22 and a bearing support member 50 are housed inside the worm wheel housing member 41. The worm wheel 22 is fixed to an outer circumferential face of the output shaft 12B so as to be integrally rotatable therewith. The bearing support member 50 has a cylindrical shape and is mounted so as to be rotatable relative to the outer circumferential face of the output shaft 12B. The worm wheel 22 and the bearing support member 50 are arranged spaced apart from each other in the axial direction of the worm wheel housing member 41. The worm wheel 22 is disposed between the bearing support member 50 and the end wall of the worm wheel housing member 41. The worm wheel housing member 41, the worm wheel 22, and the bearing support member 50 are disposed coaxially.

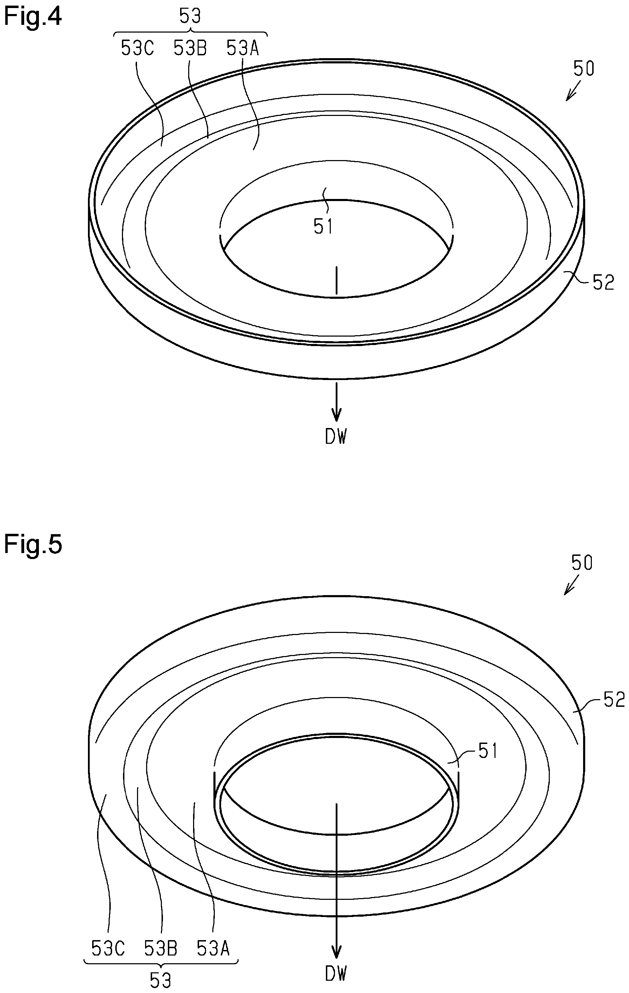

As illustrated in FIG. 4 and FIG. 5, the bearing support member 50 has an inner circumferential wall 51 that is tubular in shape, an outer circumferential wall 52 that is tubular in shape, and a coupling wall 53 that is ring-shaped.
The inner circumferential wall 51 is situated on an inner side in the radial direction from the outer circumferential wall 52. The position of the inner circumferential wall 51 in the axial direction and the position of the outer circumferential wall 52 in the axial direction are slightly different. The coupling wall 53 is a wall portion of the bearing support member 50 that extends in the radial direction. The coupling wall 53 couples a basal end portion of the inner circumferential wall 51 and a basal end portion of the outer circumferential wall 52. A distal end portion of the inner circumferential wall 51 and a distal end portion of the outer circumferential wall 52 face in opposite directions to each other in the axial direction. The distal end portion is an end portion opposite to the basal end portion.

The coupling wall 53 has an inner-side flat portion 53A, an inclined portion 53B, and an outer-side flat portion 53C. With respect to the inner circumferential wall 51 as a reference, the inner-side flat portion 53A, the inclined portion 53B, and the outer-side flat portion 53C are coupled in this order. The inner-side flat portion 53A and the outer-side flat portion 53C extend in the direction that is orthogonal to the axial direction. An inner circumferential portion of the inner-side flat portion 53Ais coupled to the basal end portion of the inner circumferential wall 51. An outer circumferential portion of the outer-side flat portion 53C is coupled to the basal end portion of the outer circumferential wall 52. The outer-side flat portion 53C is disposed at a position offset toward the distal end portion side of the inner circumferential wall 51 in the axial direction of the bearing support member 50, with respect to the inner-side flat portion 53A. The inclined portion 53B is inclined such that the further outward in the radial direction a site of the coupling wall 53 is, the closer to the distal end portion of the inner circumferential wall 51 this site is in the axial direction of the bearing support member 50.

A bore diameter of the inner circumferential wall 51 is set to be slightly shorter than an outside diameter of a bearing 71. An outside diameter of the outer circumferential wall 52 is set to be slightly longer than an bore diameter of the worm wheel housing member 41. The bore diameter of the inner circumferential wall 51 and the outside diameter of the outer circumferential wall 52 are determined in accordance with press-fitting allowance that is set.

The bearing support member 50 is formed by bending a single plate material. The bearing support member 50 is made of, for example, a magnetic material. The magnetic material includes a magnetic metal such as iron or the like. The bearing support member 50 is formed by plastically deforming a single metal plate that has been punched into a predetermined shape by a press, for example.

As illustrated in FIG. 3, an inner circumferential face of the bearing support member 50, i.e., an inner circumferential face of the inner circumferential wall 51, is fitted onto an outer circumferential face of the bearing 71. An outer circumferential face of the bearing support member 50, i.e., an outer circumferential face of the outer circumferential wall 52, is fitted into an inner circumferential face of the worm wheel housing member 41. The bearing support member 50 is press-fitted into the inner circumferential face of the worm wheel housing member 41 from a mounting direction DW. The mounting direction DW is a direction in the axial line of the worm wheel housing member 41, and is a direction in which the bearing support member 50 is inserted into the worm wheel housing member 41. The position of the bearing support member 50 in the axial direction, relative to the worm wheel housing member 41, is determined by managing the press-fitting stroke of a press-fitting device (omitted from illustration). The inner circumferential wall 51 extends from the coupling wall 53 in the same direction as the mounting direction DW. The outer circumferential wall 52 extends from the coupling wall 53 in the opposite direction to the mounting direction DW. The distal end portion of the inner circumferential wall 51 faces in the same direction as the mounting direction DW. The distal end portion of the outer circumferential wall 52 faces in the opposite direction to the mounting direction DW. The basal end portion of the outer circumferential wall 52 is disposed at a position shifted in the mounting direction DW with respect to the basal end portion of the inner circumferential wall 51. The inclined portion 53B is inclined so that the further outward in the radial direction a site of the inclined portion 53B is, the further the site is displaced in the mounting direction DW.

The output shaft 12B is supported via a bearing 61 so as to be rotatable with respect to an inner circumferential face of the bearing support portion 43. The bearing 61 is in a state in which movement in the axial direction is restricted. A stepped portion 62 that is ring-shaped, and a snap ring 63, are provided on the outer circumferential face of the output shaft 12B. An inner ring of the bearing 61 is interposed between the stepped portion 62 and the snap ring 63. A protruding portion 64 and a snap ring 65, which are ring-shaped, are provided on the inner circumferential face of the bearing support portion 43. An outer ring of the bearing 61 is interposed between the protruding portion 64 and the snap ring 65.

The output shaft 12B is supported via the bearing 71 so as to be rotatable with respect to the inner circumferential wall 51 of the bearing support member 50. The bearing 71 is in a state in which movement in the axial direction is restricted. A ridge 72 that is ring-shaped is provided on the outer circumferential face of the output shaft 12B. Also, a nut member that is tubular in shape (omitted from illustration) is mounted to the first end portion of the output shaft 12B. An inner ring of the bearing 71 is interposed between the ridge 72 and the nut member. An outer ring of the bearing 71 is maintained in a state of being elastically pressed inward in the radial direction by the inner circumferential wall 51. The outer ring of the bearing 71 is supported by the inner circumferential wall 51.

Inside space of the worm wheel housing member 41 is partitioned into two spaces by the bearing support member 50. A sensor 80 is provided in a space between the bearing support member 50 and the flange 31. The sensor 80 includes a torque sensor and a rotational angle sensor. The torque sensor detects steering torque based on the amount of twist of the torsion bar 12C. The rotational angle sensor detects a rotational angle of the input shaft 12A as a steering angle. Grease is sealed in a space between the bearing support member 50 and the end wall of the worm wheel housing member 41.

### <Functions and Effects of First Embodiment>

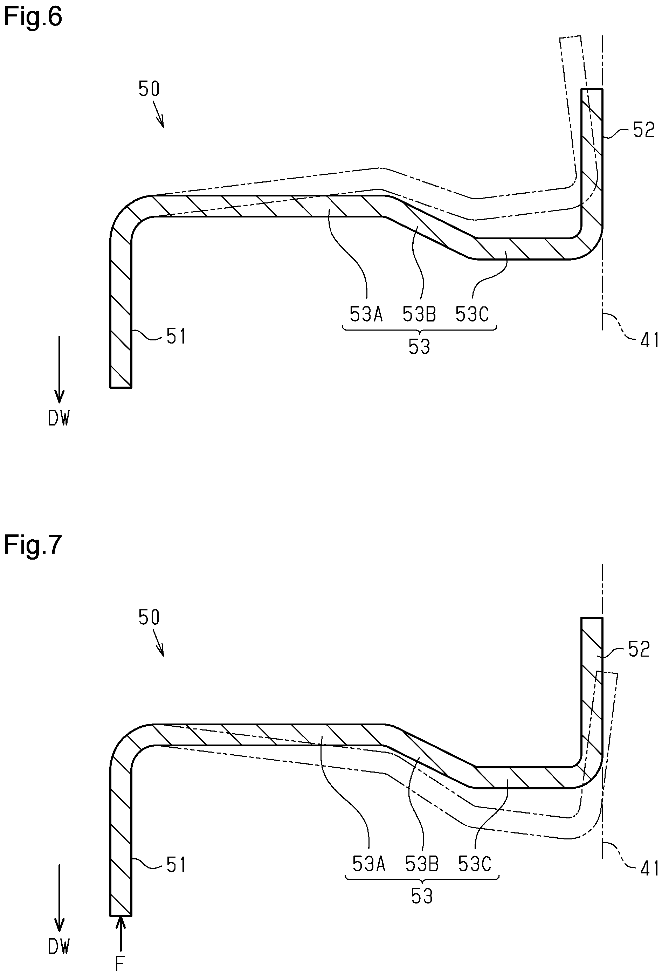

The first embodiment achieves the following functions and effects.
(1-1) As illustrated in FIG. 6, the bearing support member 50 is mounted to the worm wheel housing member 41, in an orientation such that the outer circumferential wall 52 faces in the opposite direction to the mounting direction DW. When the bearing support member 50 is press-fitted inside the worm wheel housing member 41, the outer circumferential face of the outer circumferential wall 52 slides over the inner circumferential face of the worm wheel housing member 41. At this time, sliding resistance acts on the outer circumferential wall 52 in the direction opposite to the mounting direction DW. Due to this sliding resistance, the coupling wall 53 is slightly elastically deformed so as to incline in the direction opposite to the mounting direction DW, with a coupling portion between the inner circumferential wall 51 and the inner-side flat portion 53A as a fulcrum. In conjunction therewith, the distal end portion of the outer circumferential wall 52 is inclined inward in the radial direction, so that an outside diameter of the distal end portion of the outer circumferential wall 52 is slightly reduced.

Accordingly, an area of contact between the outer circumferential face of the outer circumferential wall 52 and the worm wheel housing member 41 is reduced. Also, reduction in the contact area reduces the sliding resistance between the outer circumferential wall 52 and the worm wheel housing member 41. The bearing support member 50 is more easily inserted inside the worm wheel housing member 41, and accordingly ease of assembly is improved. Also, a press-fitting load can be reduced. The press-fitting load is force required to press-fit the bearing support member 50 inside the worm wheel housing member 41. Accordingly, a novel steering system 1 can be obtained in which the bearing support member 50 is easily press-fitted inside of the worm wheel housing member 41.

(1-2) There is concern that so-called reverse input load F will act on the output shaft 12B due to the vehicle running over a curb, an end abutting of the rack shaft 5 occurring, or the like. This "end abutting" occurs when the end portion of the rack shaft 5 strikes against the housing 10. The reverse input load F is a force in the direction opposite to the mounting direction DW. As illustrated in FIG. 7, the reverse input load F is conveyed to the inner circumferential wall 51 of the bearing support member 50 via the output shaft 12B and the bearing 71. Under this reverse input load F, a force acts on the coupling wall 53 so as to tilt the coupling wall 53 in the same direction as the mounting direction DW, with the coupling portion of the inner circumferential wall 51 and the inner-side flat portion 53A as a fulcrum. In conjunction therewith, a force acts on the outer circumferential wall 52 so as to tilt the distal end portion of the outer circumferential wall 52 outward in the radial direction, such that the outside diameter of the distal end portion of the outer circumferential wall 52 increases.

Thus, the outer circumferential face of the outer circumferential wall 52 is pressed more strongly outward in the radial direction against the inner circumferential face of the worm wheel housing member 41. As the contact load of the outer circumferential face of the outer circumferential wall 52 on the inner circumferential face of the worm wheel housing member 41 increases, a dislodging load of the bearing support member 50 increases. The dislodging load is a force required to move the bearing support member 50, which is in a state of having been press-fitted into the worm wheel housing member 41, in the direction opposite to the mounting direction DW. Accordingly, as the dislodging load increases, movement of the bearing support member 50 in the direction opposite to the mounting direction DW is suppressed. Even if a reverse input load F happens to act on the output shaft 12B, the bearing support member 50 will be maintained in a proper position in the axial direction. A novel steering system 1 in which the bearing support member 50 is less readily dislodged in the direction opposite to the mounting direction DW can be obtained.

Note that providing the outer circumferential wall 52 so as to face in the same direction as the mounting direction DW is conceivable. In this case, when a reverse input load F acts on the output shaft 12B, the coupling wall 53 elastically deforms slightly so as to incline in the same direction as the mounting direction DW, with the coupling portion of the inner circumferential wall 51 and the inner-side flat portion 53A as a fulcrum. In conjunction therewith, the distal end portion of the outer circumferential wall 52 is inclined inward in the radial direction, so that an outside diameter of the distal end portion of the outer circumferential wall 52 is slightly reduced. Therefore, the contact load of the outer circumferential face of the outer circumferential wall 52 upon the inner circumferential face of the worm wheel housing member 41 is reduced, which may reduce the dislodging load of the bearing support member 50. Accordingly, from the perspective of securing the dislodging load of the bearing support member 50, the outer circumferential wall 52 is preferably provided so as to face in the opposite direction to the mounting direction DW.

(1-3) The bearing support member 50 is maintained in a state of being press-fitted to the inner circumferential face of the worm wheel housing member 41. Thus, there is no need to provide a separate member for maintaining the position of the bearing support member 50 in the axial direction. Also, fastening components such as bolts for fixing the bearing support member 50 to the worm wheel housing member 41 are unnecessary. Therefore, increase in the number of components of the steering system 1 can be suppressed. Also, production costs of the steering system 1 can be reduced.

(1-4) The bearing support member 50 is maintained in a state of being press-fitted to the inner circumferential face of the worm wheel housing member 41. The inner circumferential face of the inner circumferential wall 51 is maintained in a state of being elastically pressed inward in the radial direction against the outer circumferential face of the outer ring of the bearing 71. Ideally, there is no clearance present between the inner circumferential face of the inner circumferential wall 51 and the outer circumferential face of the outer ring of the bearing 71. Accordingly, it is difficult for the grease to pass through a boundary portion of the inner circumferential face of the inner circumferential wall 51 and the outer circumferential face of the outer ring of the bearing 71. Thus, leakage of grease from a first space between the bearing support member 50 and the end wall of the worm wheel housing member 41 to a second space between the bearing support member 50 and the flange 31 is suppressed.

Also, the outer circumferential face of the outer circumferential wall 52 is maintained in a state of being elastically pressed outward in the radial direction against the inner circumferential face of the worm wheel housing member 41. Ideally, there is no clearance present between the outer circumferential face of the outer circumferential wall 52 and the inner circumferential face of the worm wheel housing member 41. Accordingly, it is difficult for the grease to pass through a boundary portion of the outer circumferential face of the outer circumferential wall 52 and the inner circumferential face of the worm wheel housing member 41. Thus, leakage of the grease from the first space between the bearing support member 50 and the end wall of the worm wheel housing member 41 to the second space between the bearing support member 50 and the flange 31 is suppressed.

(1-5) Ideally, there is no clearance present between the inner circumferential face of the inner circumferential wall 51 and the outer circumferential face of the outer ring of the bearing 71. Accordingly, occurrence of rattling or stick-slip noise between the bearing support member 50 and the bearing 71 is suppressed. This "stick-slip noise" is abnormal noise that occurs when components, which are the bearing support member 50 and the bearing 71 in this case, rub against each other. Thus, quietness of the steering system 1 can be improved.

(1-6) The coupling wall 53 has the inclined portion 53B. By adjusting the degree of inclination of the inclined portion 53B, load deflection characteristic of the coupling wall 53 can be adjusted. This "load deflection characteristic" is a relation between a load acting on a component and the amount of deflection of that component with respect to that load.

(1-7) The bearing support member 50 is formed by bending a single plate material. The plate material is, for example, a metal plate that has magnetic properties. Accordingly, the bearing support member 50 can be easily formed by pressing or the like. Also, the weight of the bearing support member 50 can be reduced.

(1-8) The bearing support member 50 is made of metal. Accordingly, when the bearing support member 50 is mounted to the worm wheel housing member 41, for example, damage to the bearing support member 50 can be suppressed.

(1-9) The worm wheel 22, the bearing support member 50, and the sensor 80 can be assembled to the worm wheel housing member 41 from one direction in the mounting direction DW, and accordingly the ease of assembly is improved.

### <Second Embodiment>

A second embodiment of a steering system will be described. The present embodiment basically has the same configuration as that of the first embodiment illustrated in FIG. 1 to FIG. 7. Accordingly, members and configurations that are the same as those in the first embodiment will be denoted by the same signs as those therein, and detailed description thereof will be omitted.

The sensor 80 includes a magnetic torque sensor. The torque sensor has a permanent magnet fixed to the input shaft 12A, and a yoke unit fixed to the output shaft 12B. The yoke unit is made by integrating two yokes via a resin portion. When torque is applied to the input shaft 12A and the torsion bar 12C is torsionally deformed, relative positions of the permanent magnet and the yoke in a rotational direction change. The torque sensor detects the torque applied to the torsion bar 12C based on change in magnetic flux of the yoke that accompanies a change in the relative position between the permanent magnet and the yoke. The permanent magnet and the two yokes form a magnetic circuit.

In a case in which a magnetic field generating source, such as an in-vehicle speaker or the like, is present near the steering system 1, there is concern that magnetic flux generated from the magnetic field generating source may be applied to the sensor 80 via a first magnetic flux route R1. The first magnetic flux route R1 is a route that includes the upper tube 16, the lower tube 17, and the sensor 80. In this case, there is concern that torque detection precision of the sensor 80 may be reduced due to the sensor 80 being affected by the magnetic field from the magnetic field generating source. Accordingly, the following configuration is adopted in the present embodiment for the steering system 1.

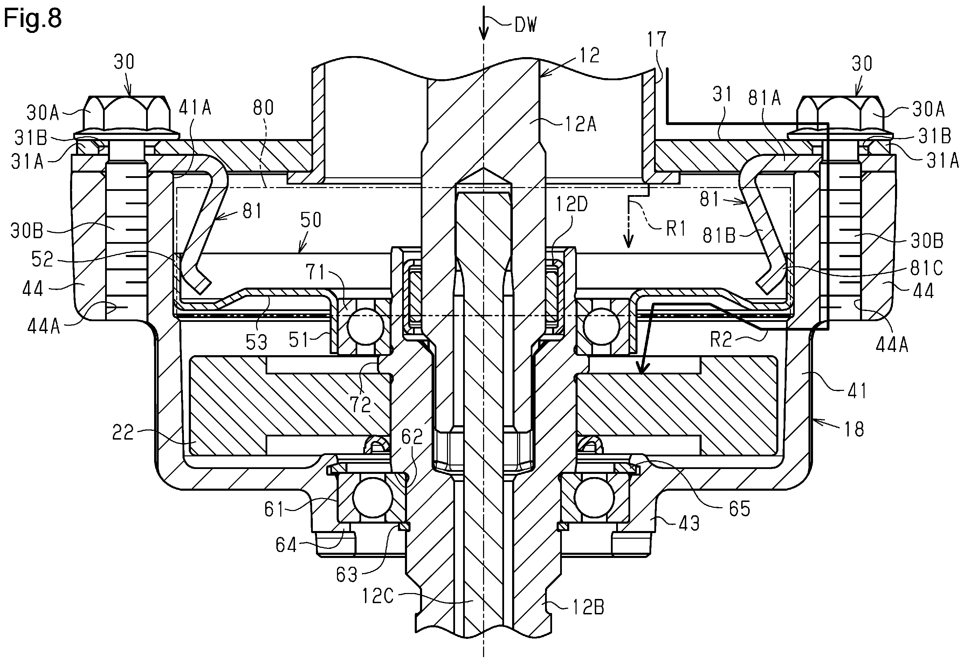

As illustrated in FIG. 8, the steering system 1 has two magnetic path members 81. The magnetic path members 81 serve to connect the flange 31 and the outer circumferential wall 51 of the bearing support member 50. The magnetic path members 81 are made of magnetic metal. The magnetic path members 81 are each formed by bending a single metal plate. The magnetic path members 81 are each formed by plastically deforming a single metal plate that has been punched into a predetermined shape by a press, for example.

Each magnetic path member 81 has a first magnetic path portion 81A and a second magnetic path portion 81B. The first magnetic path portion 81A extends in the radial direction of the worm wheel housing member 41. The first magnetic path portion 81A has a flat plate shape and is clamped between the tightening portion 44 of the worm wheel housing member 41 and the attachment portion 31A of the flange 31. The first magnetic path portion 81A is fastened together with the attachment portion 31A and the tightening portion 44 in the axial direction by the bolt 30. A portion of a first end portion in the radial direction of the first magnetic path portion 81A may be exposed to the outside of the housing 18. A second end portion in the radial direction of the first magnetic path portion 81A is situated inside the housing 18.

The second magnetic path portion 81B is inclined so as to be closer to the inner circumferential face of the worm wheel housing member 41, the further in the mounting direction DW of the bearing support member 50. A first end portion of the second magnetic path portion 81B is coupled to the second end portion of the first magnetic path portion 81A. The coupling portion of the first magnetic path portion 81A and the second magnetic path portion B is smoothly curved. A second end portion of the second magnetic path portion 81B is curved inward in the radial direction of the worm wheel housing member 41. A curved convex portion of the second end portion functions as a contact portion 81C to come into contact with the bearing support member 50. The contact portion 81C is maintained in a state of being elastically pressed outward in the radial direction against an inner circumferential face of the outer circumferential wall 52.

The distance between the bearing support member 50 and the worm wheel 22 in the axial direction is set to a distance such that allows magnetic flux from an assumed magnetic field generating source to pass through. Also, the upper tube 16, the lower tube 17, the flange 31, the magnetic path member 81, the bearing support member 50, and the worm wheel 22 are all made of magnetic metal. Accordingly, the upper tube 16, the lower tube 17, the flange 31, the magnetic path member 81, the bearing support member 50, and the worm wheel 22 can be magnetically coupled to one another, and can form a second magnetic flux route R2. The second magnetic flux route R2 is a magnetic flux route that bypasses around the sensor 80.

Ideally, there is no clearance present between the flange 31 and the first magnetic path portion 81A. In contrast, the flange 31 and a magnetic member of the sensor 80 are spaced apart in the axial direction. That is to say, the magnetic resistance between the flange 31 and the first magnetic path portion 81A is smaller than the magnetic resistance between the flange 31 and the magnetic member of the sensor 80. The magnetic member is a permanent magnet and a yoke. Accordingly, magnetic flux applied from the outside of the steering system 1 is more likely to flow into the first magnetic path portion 81A than into the magnetic member of the sensor 80.

The distance in the axial direction between the distal end portion of the inner circumferential wall 51 of the bearing support member 50 and the worm wheel 22 is shorter than the distance in the axial direction between the flange 31 and the magnetic member of the sensor 80. Also, the distance in the axial direction between the distal end portion of the inner circumferential wall 51 of the bearing support member 50 and the worm wheel 22 is shorter than the distance in the axial direction between the magnetic member of the sensor 80 and the worm wheel 22. Accordingly, in total, the magnetic resistance of the second magnetic flux route R2 is smaller than the magnetic resistance of the first magnetic flux route R1.

Note that a small clearance may be present between the flange 31 and the first magnetic path portion 81A. However, the clearance is less than the distance in the axial direction between the flange 31 and the magnetic member of the sensor 80. Also, a slight clearance may be present between the contact portion 81C and the inner circumferential face of the outer circumferential wall 52. However, this clearance is large enough to allow magnetic flux from an assumed magnetic field generating source to pass through.

### <Functions and Effects of Second Embodiment>

The second embodiment achieves the following functions and effects in addition to the functions and effects of the first embodiment described above in sections (1-1) to (1-9).

(2-1) The magnetic resistance of the second magnetic flux route R2 that does not include the sensor 80 is smaller than the magnetic resistance of the first magnetic flux route R1 that includes the sensor 80. Accordingly, magnetic flux applied from the outside of the steering system 1 passes over the second magnetic flux route R2 that bypasses around the outside of the sensor 80 in the radial direction, rather than the first magnetic flux route R1 that includes the sensor 80. Suppressing the magnetic flux from the magnetic field generating source from being applied to the sensor 80 enables the detection precision of the sensor 80 to be ensured.

Note that in a case of the bearing support member 50 being made of a non-magnetic material such as synthetic resin or the like, it is difficult to form the second magnetic flux route R2 that bypasses around the outside in the radial direction of the sensor 80. In this case, the probability of the magnetic flux from the magnetic field generating source passing over the first magnetic flux route R1 that includes the sensor 80 is high.

(2-2) The second magnetic flux route R2 that bypasses the sensor 80 is formed by utilizing members having magnetic properties, such as the flange 31, the bearing support member 50, the worm wheel 22, and so forth. Providing the magnetic path members 81 for magnetically coupling the flange 31 and the bearing support member 50 is all that is needed. Accordingly, production costs can be reduced as compared to a case in which a magnetic shield is provided to cover around the sensor 80, for example. Machining of the magnetic shield is complicated, and accordingly may increase production costs. According to the present embodiment, magnetically coupling members and components having magnetic properties, which are present around the sensor 80, to each other, enables the steering system 1 to be imparted with a function of a magnetic shield that blocks the effects of outside magnetic fields on the sensor 80.

### <Other Embodiments>

Note that the first and second embodiments may be carried out modified as follows.
- In the first embodiment, the bearing support member 50 and the housing 18 may be made of synthetic resin. Synthetic resin materials are less expensive than metal materials. Accordingly, production costs of the steering system 1 can be reduced.
- In the first embodiment, the inclined portion 53B of the coupling wall 53 may be omitted. In this case, the coupling wall 53 is a flat wall portion extending in the radial direction. • In the second embodiment, just one magnetic path member 81 may be provided. Alternatively, three or more magnetic path members 81 may be provided.
- In the second embodiment, the magnetic path member 81 may be omitted, depending on the product specifications and so forth. In this case, for example, the distance in the axial direction between the flange 31 and the outer circumferential wall 52 is shortened to an extent such that the flange 31 and the outer circumferential wall 52 can be magnetically coupled to each other. For example, the outer circumferential wall 52 may extend in the direction opposite to the mounting direction DW. An extent such that magnetic coupling can be realized means an extent such that magnetic flux from a magnetic flux generating source can pass through from the flange 31 to the outer circumferential wall 52.
- In the second embodiment, in a case of omitting the magnetic path member 81, the housing 18 may be made of a magnetic metal. In this case, the magnetic flux from the magnetic flux generating source passes through, for example, the flange 31, the worm wheel housing member 41, and the bearing support member 50, in that order.
- In the second embodiment, the second magnetic flux route R2 may include a component that comes into contact with the output shaft 12B in the configuration. For example, in a case in which the outer ring, the inner ring, and balls, of the bearing 71 are made of a magnetic metal, the bearing 71 may form part of second magnetic flux route R2.
- Depending on the product specifications or the like, there is no need for the steering system 1 to be provided with the configuration for adjusting the up-down position of the steering wheel 6 and the configuration for adjusting the position of the steering wheel 6 in the axial direction. In this case, a non-telescopic single support tube is provided in place of the upper tube 16 and the lower tube 17. This single support tube rotatably supports the steering shaft 2. Also, the housing 18 is fixed to the frame 14 of the vehicle body. A configuration in which the support portions 18A and the support shaft 18B are omitted from the housing 18 may be adopted. Also, there is no need for the lock mechanism that selectively locks and unlocks swinging of the steering column 15 about the support shaft 18B and telescopic motion of the steering column 15.
- The steering system 1 may be a steer-by-wire steering system. In this case, transmission of power between the steering wheel 6 and the steered wheels is separated. The motor 19 functions as a reaction force motor. The reaction force motor generates steering reaction torque that is applied to the steering shaft 2 of the vehicle. The steering reaction torque is torque in an opposite direction from a steering direction of the steering wheel 6.

## Claims

1. A steering system, comprising:
a support tube that is cylindrical in shape, has a flange, and rotatably supports a steering shaft;
a speed reducer that is configured to apply torque to the steering shaft;
a housing that has a cylindrical portion housing the speed reducer, the cylindrical portion being coaxially coupled to the flange;
a bearing support member through which the steering shaft passes, and that is fitted to an inner circumferential face of the cylindrical portion from a mounting direction that is a direction along an axial direction; and
a bearing interposed between an outer circumferential face of the steering shaft and an inner circumferential face of the bearing support member, wherein
the bearing support member has an inner circumferential wall that fits to an outer circumferential face of the bearing, an outer circumferential wall that fits to an inner circumferential face of the cylindrical portion, and a coupling wall that couples the inner circumferential wall and the outer circumferential wall in a radial direction,
the inner circumferential wall has a basal end portion coupled to the coupling wall, and also extends from the coupling wall in the same direction as the mounting direction, and
the outer circumferential wall has a basal end portion coupled to the coupling wall, and also extends from the coupling wall in an opposite direction from the mounting direction.

2. The steering system according to claim 1, wherein the coupling wall has an inclined portion that is inclined such that the further outward in the radial direction a site of the inclined portion is, the further the site is displaced in the mounting direction.

3. The steering system according to claim 1 or 2, wherein the bearing support member is formed by bending a single plate material.

4. The steering system according to any one of claims 1 to 3, wherein the bearing support member is made of a metal.

5. The steering system according to any one of claims 1 to 4, wherein
the steering system includes a sensor of a magnetic type, the sensor being disposed in a space between the flange and the bearing support member inside the housing,
the flange and the bearing support member are made of a magnetic metal, and the housing is made of a non-magnetic metal, and
the flange and the bearing support member are configured to form a magnetic flux route that bypasses around the sensor.

6. The steering system according to claim 5, further comprising a magnetic path member made of a magnetic metal that connects the flange and the outer circumferential wall.

7. The steering system according to any one of claims 1 to 6, wherein
the speed reducer has a worm wheel that integrally rotates with the steering shaft, and a worm that meshes with the worm wheel,
the housing has a worm wheel housing member housing the worm wheel, and a worm housing member housing the worm, and
the cylindrical portion is the worm wheel housing member.
